# EUROPÄISCHE PATENTANMELDUNG

(11) **EP 4 404 511 A1**
(43) Veröffentlichungstag der Anmeldung: **24.07.2024**
(21) Anmeldenummer: 23219642.8
(22) Anmeldetag: 22.12.2023
(51) Int. Cl.: H04L 12/12

(54) **VERFAHREN ZUM BETREIBEN EINER HEIMAUTOMATISIERUNGSANORDNUNG**

(30) Priorität: 18.01.2023 DE 102023101185
(71) Anmelder: DELTA DORE RADEMACHER GmbH, 46414 Rhede (DE)
(72) Erfinder: Burdack, Frank, 46397 Bocholt (DE); Klein-Hitpaß, Nils, 46414 Rhede (DE)
(74) Vertreter: Gottschald Patentanwälte Partnerschaft mbB

(57) **Zusammenfassung**

Die Erfindung betrifft ein Verfahren zum Betreiben einer Heimautomatisierungsanordnung (1) mit einer ersten Einheit (2) und einer zweiten Einheit (3), wobei die erste Einheit (2) und die zweite Einheit (3) miteinander gepairt sind und/oder demselben Heimautomatisierungsnetzwerk (5) angehören,
wobei die erste Einheit (2) einen Betriebsmodus (11) und einen Energiesparmodus (12) aufweist, in welchem die erste Einheit (2) weniger Energie verbraucht als im Betriebsmodus (11). Es wird vorgeschlagen,
dass eine dritte Einheit (4) vorgesehen ist, dass die erste Einheit (2) und die dritte Einheit (4) eine Parent-Child-Verbindung (13) eingegangen sind und die dritte Einheit (4) auf das direkte oder indirekt Empfangen einer Nachricht (10) von der zweiten Einheit (3) für die erste Einheit (2) die erste Einheit (2) mit einem Aufwecksignal (22) aufweckt.

## Beschreibung

Die vorliegende Erfindung betrifft ein Verfahren zum Betreiben einer Heimautomatisierungsanordnung gemäß dem Oberbegriff von Anspruch 1 sowie eine Heimautomatisierungsanordnung gemäß dem Oberbegriff von Anspruch 14.

Grundsätzlich sind verschiedene Verfahren zum Betreiben von Heimautomatisierungsanordnungen bekannt. Heimautomatisierungsanordnungen weisen in der Regel mehrere Einheiten auf. Dies können beispielsweise Rollladenantriebseinheiten, Aktoreinheiten, Sensoreinheiten und/oder Fernbedienungen sein. Die Kommunikation zwischen den verschiedenen Einheiten kann mittels unterschiedlicher Protokolle erfolgen. Zigbee ist ein gängiges Protokoll, einige Hersteller verwenden jedoch zum Beispiel auch proprietäre Protokolle. Insbesondere wenn eine Einheit batteriebetrieben oder solarbetrieben ist, ist der Energieverbrauch dieser Einheit von hoher Bedeutung. Darum weisen diese in der Regel einen Energiesparmodus auf, in dem sie zwar weniger Energie verbrauchen, aber auch nicht immer für alle Einheiten des Netzwerks sofort erreichbar sind. Gleichzeitig sind jedoch auch schnelle Reaktionszeiten wünschenswert, da eine Einheit zügig auf eine Nachricht, insbesondere einen Befehl, reagieren soll.

Um den Energieverbrauch einer Einheit zu reduzieren ist es beispielsweise bekannt, eine Einheit mittels einer sogenannten Parent-Child-Verbindung in eine Heimautomatisierungsanordnung einzubinden. Dabei wird zwischen einer Einheit als Parent und einer Einheit als Child eine Verbindung eingegangen und das Child wird über seinen Parent in das Heimautomatisierungsnetzwerk integriert. Hier ist es beispielsweise bekannt, dass das Child in einem festen Rhythmus bei seinem Parent nachfragt, ob Nachrichten, insbesondere Befehle, vorliegen. Ist dies der Fall, holt es sich diese ab und führt sie aus. In der Zeit zwischen zwei Nachfragen kann sich das Child in einen Energiesparmodus begeben. Nachteilig hieran ist insbesondere, dass die Reaktionszeit und der Energieverbrauch direkt von der Frequenz abhängen, mit der das Child bei seinem Parent nachfragt, ob eine Nachricht vorliegt, und diese sich wechselweise negativ beeinflussen.

Der bekannte Stand der Technik, von dem die Erfindung ausgeht, betrifft eine Verfahren gemäß dem Oberbegriff von Anspruch 1.

Es ist dabei eine Herausforderung, auf der einen Seite einen niedrigen Energieverbrauch zu ermöglichen und gleichzeitig eine geringe Reaktionszeit sicherzustellen.

Der Erfindung liegt das Problem zugrunde, das bekannte Verfahren derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, eine kurze Reaktionszeit dadurch sicherzustellen, dass sich das Child nicht mehr einen Befehl bei seinem Parent abholt, sondern dieses mit einem besonders sparsamen Energiesparmodus zu versehen, welcher es ermöglicht, das Child als erste Einheit durch ein Aufwecksignal einer dritten Einheit als Parent sicher aus dem Energiesparmodus in einen Betriebsmodus zu überführen. Dann kann die erste Einheit als Child vom Parent aufgeweckt werden und hierdurch schnell und sicher eine Nachricht empfangen sowie einen darin enthaltenen Befehl ausführen.

Im Einzelnen wird vorgeschlagen, dass eine dritte Einheit vorgesehen ist, dass die erste Einheit und die dritte Einheit eine Parent-Child-Verbindung eingegangen sind und die dritte Einheit auf das direkte oder indirekt Empfangen einer Nachricht von der zweiten Einheit für die erste Einheit die erste Einheit mit einem Aufwecksignal aufweckt.

Eine besonders zuverlässige Übermittlung einer Nachricht an die erste Einheit kann gemäß Anspruch 2 dadurch gewährleistet werden, dass die dritte Einheit nicht nur das Aufwecksignal aussendet, sondern auch die Nachricht von der zweiten Einheit für die erste Einheit weiterleitet.

Besonders sparsam kann die erste Einheit betrieben werden, wenn das Aufwecksignal von der ersten Einheit mehrstufig geprüft wird, bevor sie in den Betriebsmodus wechselt (Anspruch 3).

Der Anspruch 4 beschreibt eine bevorzugte Ausgestaltung des Energiesparmodus, welche ein sicheres Aufwecken der ersten Einheit durch das Aufwecksignal sicherstellt.

Die Ansprüche 5 bis 8 beschreiben bevorzugte Ausgestaltungen der Kommunikation innerhalb der Heimautomatisierungsanordnung.

Weitere vorteilhafte Ausgestaltungen des Verfahrens hinsichtlich der Parent-Child-Verbindung sind in den Ansprüchen 9 und 10 beschrieben. Diese ermöglichen eine sichere und stabile Kommunikation.

In den Ansprüchen 11 bis 13 sind weitere bevorzugte Ausgestaltungen des Heimautomatisierungsnetzwerks bzw. der Heimautomatisierungsanordnung beschrieben sowie der zu diesen gehörenden Einheiten beschrieben.

Nach einer weiteren Lehre gemäß Anspruch 14, der eigenständige Bedeutung zukommt, wird eine Heimautomatisierungsanordnung beansprucht.

Dabei ist wesentlich, dass eine dritte Einheit vorgesehen ist und die erste Einheit und die dritte Einheit dazu eingerichtet sind, miteinander eine Parent-Child-Verbindung einzugehen. Die dritte Einheit ist dabei dazu eingerichtet, dass wenn eine Parent-Child-Verbindung zwischen der ersten Einheit und der dritten Einheit besteht und die dritte Einheit eine Nachricht direkt oder indirekt von der zweiten Einheit für die erste Einheit empfängt, diese ein Aufwecksignal für die erste Einheit aussendet.

Auf alle Ausführungen zu dem vorschlagsgemäßen Verfahren darf verwiesen werden.

Bevorzugte Ausgestaltungen der ersten Einheit sind im Anspruch 15 beschrieben, für welche der energiesparende Betrieb besonders vorteilhaft ist.

Im Folgenden wird die Erfindung anhand einer lediglich Ausführungsbeispiele darstellenden Zeichnung näher erläutert. In der Zeichnung zeigt
- Fig. 1: ein Ausführungsbeispiel einer vorschlagsgemäßen Heimautomatisierungsanordnung zur Durchführung des vorschlagsgemäßen Verfahrens,
- Fig. 2: ein Ausführungsbeispiel zur Durchführung des vorschlagsgemäßen Verfahrens,
- Fig. 3: ein weiteres Ausführungsbeispiel zur Durchführung des vorschlagsgemäßen Verfahrens,
- Fig. 4: ein Ausführungsbeispiel des Aufweckens der ersten Einheit aus Fig. 1 durch ein Aufwecksignal und
- Fig. 5: ein Ausführungsbeispiel zur Herstellung einer Parent-Child-Verbindung.

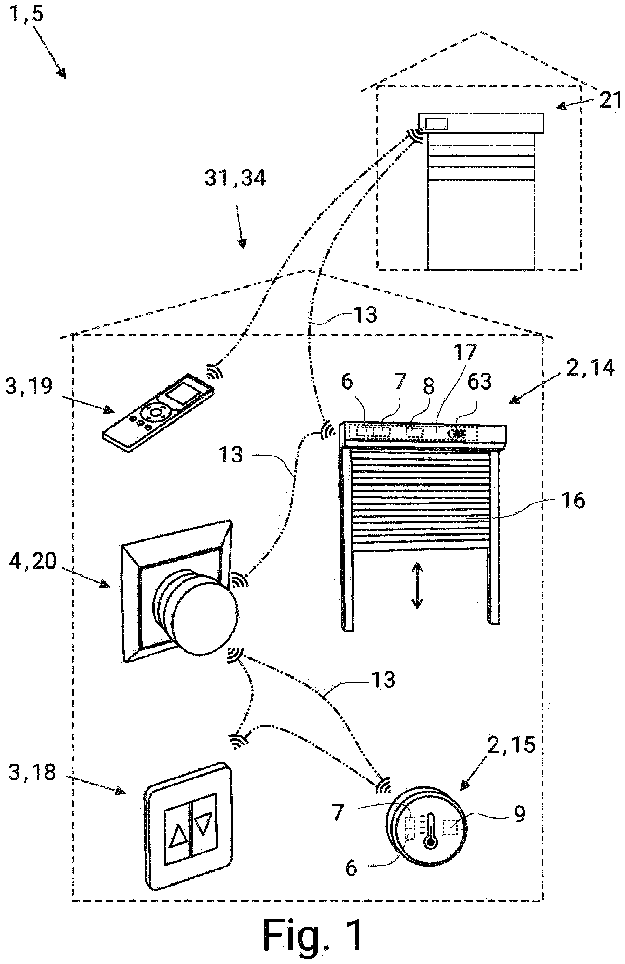

In der Fig.1 ist eine vorschlagsgemäße Heimautomatisierungsanordnung 1 mit einer ersten Einheit 2, einer zweiten Einheit 3 und einer dritten Einheit 4 zur Durchführung des vorschlagsgemäßen Verfahrens gezeigt.

Hier sind die erste Einheit 2 und die zweite Einheit 3 miteinander gepairt. Zusätzlich oder alternativ können die erste Einheit 2 und die zweite Einheit 3 demselben Heimautomatisierungsnetzwerk 5 angehören.

Die erste Einheit 2 weist hier einen Transceiver 6 und einen Prozessor 7 auf. Zusätzlich ist ein Aktuator 8 und/oder ein Sensor 9 vorgesehen. Der Transceiver 6 dient dem Senden und Empfangen von Nachrichten 10. Der Prozessor 7 dient hier dem Verarbeiten der Nachrichten 10 und dem Ausführen von darin enthaltenen Befehlen, insbesondere durch entsprechende Ansteuerung des Aktuators 8 und/oder Sensors 9.

Die erste Einheit 2 weist einen Betriebsmodus 11 und einen Energiesparmodus 12 auf. Im Energiesparmodus 12 verbraucht die erste Einheit 2 weniger Energie als im Betriebsmodus 11.

Ferner ist hier eine dritte Einheit 4 vorgesehen. Die erste Einheit 2 und die dritte Einheit 4 sind eine Parent-Child-Verbindung 13 eingegangen.

Im Ausführungsbeispiel der Fig. 1 sind zwei erste Einheiten 2 gezeigt. Dies sind hier die Rollladeneinheit 14 und die Sensoreinheit 15. Die Rollladeneinheit 14 weist einen Aktuator 8 zum Herauffahren und zum Herunterfahren eines Rollladens 16 auf. Sie kann zudem auch einen Rollladen 16 aufweisen, vorzugsweise wird sie jedoch durch einen Rohrmotor 17 für einen Rollladen 16 gebildet. Die Sensoreinheit 15 weist im Ausführungsbeispiel als Sensor 9 einen Temperatursensor auf.

Als zweite Einheit 3 ist im Ausführungsbeispiel der Fig. 1 ein Schalter 18, hier als Funk-Wandschalter ausgebildet, und als weitere zweite Einheit 3 eine bewegliche Funk-Fernbedienung 19 vorgesehen.

Die dritte Einheit 4 ist im Ausführungsbeispiel als Funkeinheit 20 ausgebildet. Ferner ist eine dritte Einheit 4 in der Form einer zweiten Rollladeneinheit 21 dargestellt, welche einem separaten Gebäude zugeordnet ist. Im Ausführungsbeispiel sind die Funkeinheit 20 und die Sensoreinheit 15 sowie die zweite Rollladeneinheit 21 und die Rollladeneinheit 14 eine Parent-Child-Verbindung 13 eingegangen. Alternativ kann die Rollladeneinheit 14 jedoch auch eine Parent-Child-Verbindung 13 mit der Funkeinheit 20 eingehen, wie dies ebenfalls in der Fig. 1 gezeigt ist.

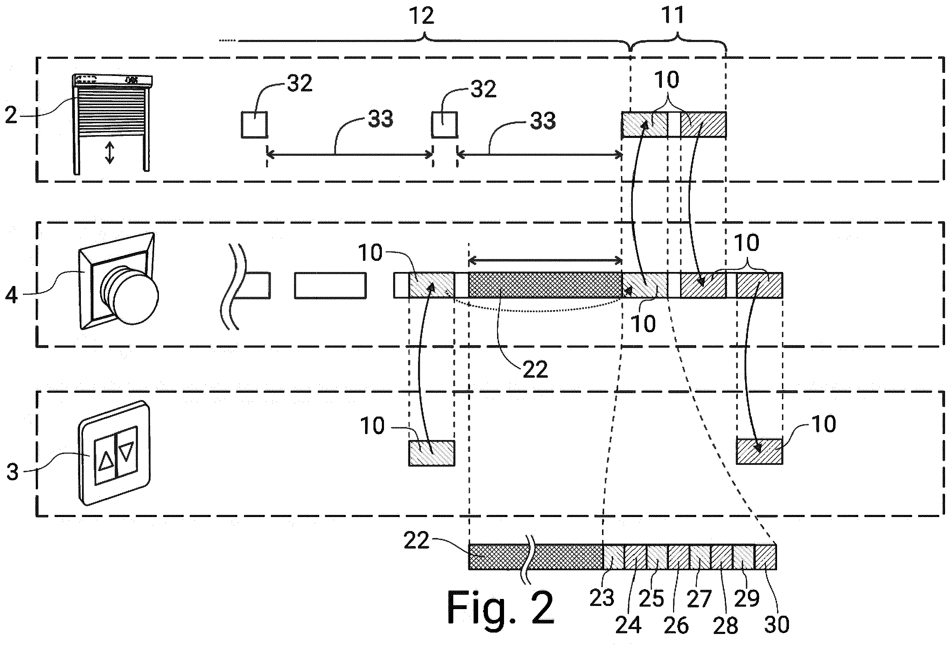

Wesentlich ist nun, dass die dritte Einheit 4, auf das direkte oder indirekt Empfangen einer Nachricht 10 von der zweiten Einheit 3 für die erste Einheit 2, die erste Einheit 2 mit einem Aufwecksignal 22 aufweckt, wie dies in der Fig. 2 gezeigt ist. Die dritte Einheit 4 überführt die erste Einheit 2 hier also mit dem Aufwecksignal 22 von dem Energiesparmodus 12 in den Betriebsmodus 11.

Hierdurch ist es für einen energiesparenden Betrieb der ersten Einheit 2 nicht mehr notwendig, dass sich die erste Einheit 2 als Child durch zyklisches Aufwachen und Abfragen einen Befehl bei seinem Parent abholt. Vielmehr wird die erste Einheit 2 mit einem besonders sparsamen Energiesparmodus 12 versehen, welcher es ermöglicht, dass die erste Einheit 2 als Child durch ein Aufwecksignal 22 der dritten Einheit 4 als Parent sicher aus dem Energiesparmodus 12 in einen Betriebsmodus 11 überführt wird. Hierdurch kann eine Nachricht 10 sicher und schnell empfangen werden sowie ein darin enthaltener Befehl ausgeführt werden und gleichzeitig ein energiesparender Betrieb sichergestellt werden. Hier zeichnet sich die Parent-Child-Verbindung 13 dadurch aus, dass sich das Parent und das Child auf eine Verbindung verständigt haben, welche es dem Parent erlaubt, das Child mit dem Aufwecksignal 22 aufzuwecken. Die Herstellung einer solchen Parent-Child-Verbindung 13 ist weiter unten näher beschrieben.

Hier und vorzugsweise ist vorgesehen, wie in der Fig. 2 gezeigt, dass die dritte Einheit 4 das Aufwecksignal 22 für die erste Einheit 2 generiert und die Nachricht 10 zu der ersten Einheit 2 weiterleitet. Dabei stellt die dritte Einheit 4 das Aufwecksignal 22 als Präambel der weitergeleiteten Nachricht 10 voran und/oder verlängert die Präambel der weiterzuleitenden Nachricht 10 zum Aufwecksignal 22. Das Aufwecksignal 22 ist hier eine Präambel für die Nachricht 10, die die dritte Einheit 4 zu der ersten Einheit 2 weiterleitet.

Die weitergeleitete Nachricht 10 weist hier das Aufwecksignal 22 sowie ein Synchronisationsfeld 23 und/oder eine Empfängerkennung 24 und/oder eine Absenderkennung 25 und/oder einen Nachrichtenzähler 26 und/oder einen Time-to-Live-Zähler 27 und/oder einen Inhalt der Nachricht 28 und/oder eine Signatur 29 und/oder ein Prüffeld 30 auf.

Das Synchronisationsfeld 23 dient der Transceiver-Synchronisation von der sendenden Einheit und der empfangenden Einheit der jeweiligen Nachricht 10. Die Empfängerkennung 24 spezifiziert die Einheit, an welche die Nachricht 10 gerichtet ist, während die Absenderkennung 25 die Einheit spezifiziert, welche diese generiert und ausgesendet hat. Der Nachrichtenzähler 26 dient dazu, die Anzahl der Nachrichten 10 zu zählen. Der Time-to-Live-Zähler 27 spezifiziert die Gültigkeitsdauer, die der Nachricht 10 mitgegeben wird. Dieser wird hier bei einer Weiterleitung der Nachricht 10 heruntergezählt. Ist dieser null, erfolgt keine Weiterleitung der Nachricht 10 durch andere Einheiten mehr. Der Inhalt der Nachricht 28 ist der eigentliche Payload der Nachricht 10. Hier ist es der auszuführende Befehl. Die Signatur 29 dient der Authentizitätsprüfung der absendenden Einheit der Nachricht 10 durch die empfangende Einheit. Das Prüffeld 30 dient der Prüfung der Nachricht 10, insbesondere auf Übermittlungsfehler im Rahmen einer zyklischen Redundanzprüfung.

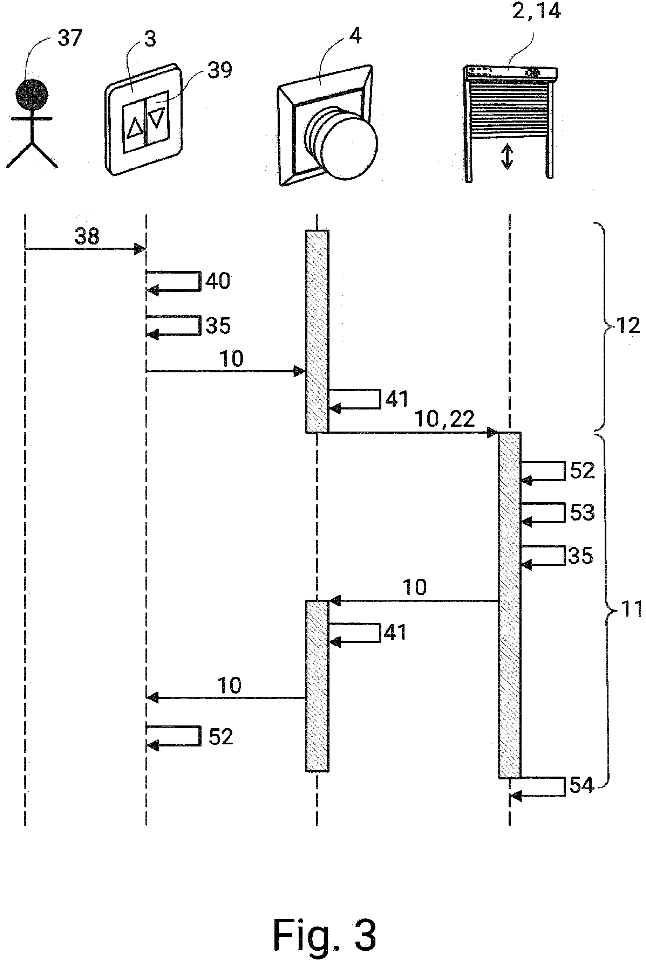

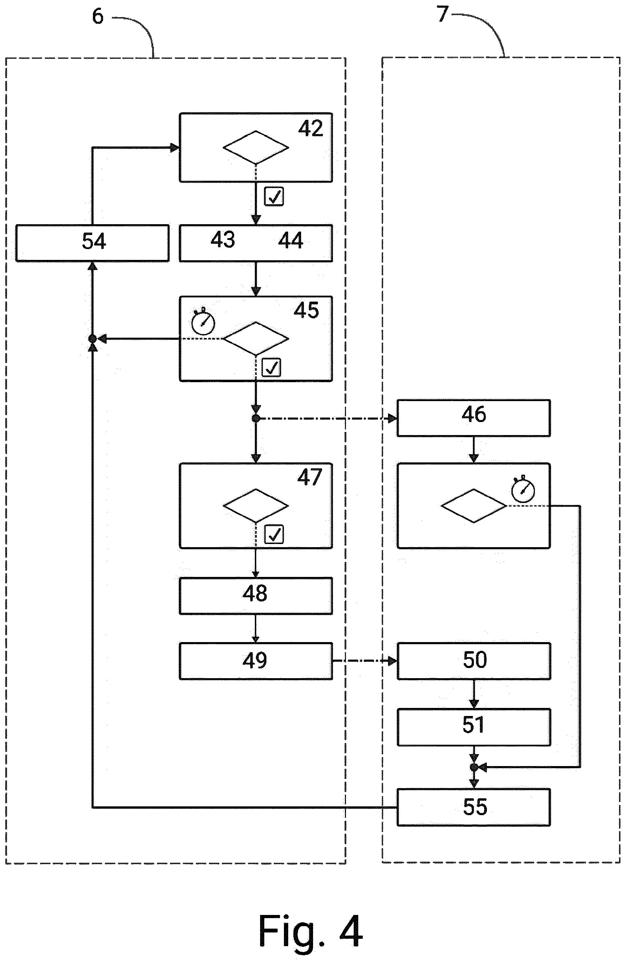

Weiter ist hier und vorzugsweise vorgesehen, dass die erste Einheit 2 das Aufwecksignal 22 mehrstufig prüft, bevor sie in den Betriebsmodus 11 wechselt. Dies ist im Zusammenhang mit den Figuren 3 und 4 näher beschrieben. Die mehrstufige Prüfung ermöglicht einen besonders geringen Energieverbrauch der ersten Einheit 2, da ein ungewollter Wechsel in den energieintensiven Betriebsmodus 11 hierdurch sehr zuverlässig vermieden werden kann.

Wie in der Fig. 2 gezeigt, weist der Energiesparmodus 12 der ersten Einheit 2 Lauschperioden 32 auf, in denen die erste Einheit 2 prüft, ob sie das Aufwecksignal 22 empfängt. Dabei ist das Aufwecksignal 22 vorzugsweise länger, als die Pause 33 zwischen zwei Lauschperioden 32. Hierdurch kann ein sicheres Aufwecken in der jeweils auf den Beginn des Aufwecksignals 22 folgenden Lauschperiode 32 sichergestellt werden.

Im Ausführungsbeispiel ist vorgesehen, dass eine Einheit 2, 3, 4 eine ursprünglich von ihr ausgehende Nachricht nach einem Resend-Timeout erneut aussendet, sofern sie innerhalb dieses Resend-Timeouts keine Bestätigung des Erhalts der Nachricht erhalten hat.

Weiter ist hier und vorzugsweise vorgesehen, dass in der Heimautomatisierungsanordnung 1 zwischen einzelnen Einheiten ein als Mesh-Netzwerk 34, insbesondere Flooding-Mesh-Netzwerk, ausgebildetes Netzwerk 31 besteht. Ein Mesh-Netzwerk 34 zeichnet sich dadurch aus, dass das einzelne oder alle Einheiten Nachrichten 10 von und für andere Einheiten weiterleiten und so weiterverteilen.

Im Ausführungsbeispiel ist die erste Einheit 2 (als Child) über die dritte Einheit 4 (als Parent) in das Netzwerk 31 integriert. Die erste Einheit 2 nimmt aber nicht an der Weiterverteilung der Nachrichten 10 im Mesh-Netzwerks 34 teil. Im Ausführungsbeispiel nehmen die Einheiten, welche als Child eine Parent-Child-Verbindung 13 eingegangen sind, nicht an der Weiterverteilung der Nachrichten 10 teil.

Weiter ist hier und vorzugsweise vorgesehen, dass eine Einheit der Heimautomatisierungsanordnung 1, insbesondere die zweite Einheit 3 und/oder die dritte Einheit 4, nicht an sie gerichtete Nachrichten 10 einer anderen Einheit erneut sendet, sofern sie keine Bestätigung des Erhalts der Nachricht 10 der anderen Einheit innerhalb einer Repeating-Zeit erhält. Die zweite Einheit 3 und/oder die dritte Einheit 4 verteilen hier also Nachrichten 10 im Mesh-Netzwerk 34 weiter. Sie sind aktive Teilnehmer des Mesh-Netzwerks 34. Beim erneuten Senden und Weiterverteilen wird hier der Time-to-Live-Zähler 27 in der Nachricht 10 reduziert. Die Repeating-Zeit ist hier die Zeitspanne, nach der eine Einheit im Netzwerk 31 eine empfangene, nicht an sie adressierte Nachricht 10 erneut sendet und so weiterverteilt, sofern sie bis dahin keine Bestätigung des Erhalts der Nachricht 10 empfangen hat. Hierdurch kann das gleichzeitige Senden sehr vieler Nachrichten 10 wirksam vermieden werden.

Im Ausführungsbeispiel ist vorgesehen, dass das Aufwecksignal 22 kürzer ist, als das Resend-Timeout, insbesondere der zweiten Einheit und/oder des Netzwerks 31, insbesondere des Mesh-Netzwerks 34. Hierdurch kann eine Störung des Aufwecksignals 22 durch ein erneutes Senden der Nachricht 10 durch eine andere Einheit wirksam vermieden werden.

Weiter ist hier und vorzugsweise vorgesehen, dass der Inhalt der Nachricht 28 von der zweiten Einheit 3 für die erste Einheit 2 verschlüsselt ist, vorzugsweise Ende-zu-Ende-verschlüsselt ist. Im Ausführungsbeispiel ist der Inhalt der Nachricht 28, insbesondere nur der Inhalt der Nachricht 28, verschlüsselt. Den oder die Schlüssel für die Verschlüsselung 35 haben die erste Einheit 2 und die zweite Einheit 3 vorzugsweise bei ihrem Pairing ausgetauscht. Hier ist vorgesehen, dass die dritte Einheit 4 den Inhalt der Nachricht 28 nicht auslesen kann.

Die Parent-Child-Verbindung 13 wird hier, insbesondere zyklisch, geprüft und bei Unterschreiten einer vorbestimmten Verbindungsqualität wird eine neue Parent-Child-Verbindung 13 aufgebaut. Hier prüft die erste Einheit 2 die Parent-Child-Verbindung 13, insbesondere zyklisch, und bei Unterschreiten einer vorbestimmten Verbindungsqualität sucht sich die erste Einheit 2 einen neuen Parent für eine neue Parent-Child-Verbindung 13. Die erste Einheit 2 wählt hier für die neue Parent-Child-Verbindung 13 diejenige Einheit als neues Parent aus, deren Antwortnachricht 36 die beste Signalqualität aufweist. Hierdurch kann eine sichere stabile Integration des Child, hier der ersten Einheit 2, in das Heimautomatisierungsnetzwerk 5 und/oder die Heimautomatisierungsanordnung 1 gewährleistet werden.

Die erste Einheit 2 weist hier nur eine Parent-Child-Verbindung 13 auf. Diese kann zwar wechseln, es besteht jedoch zu einem Zeitpunkt immer nur eine Parent-Child-Verbindung 13 zu einer dritten Einheit 4. Die erste Einheit 2 kann sich jedoch eine neue Parent-Child-Verbindung 13 suchen. Beispielsweise ist in der Fig. 1 gezeigt, dass die Rollladeneinheit 14 als erste Einheit 2 alternativ zu der zweiten Rollladeneinheit 21 als dritter Einheit 4 auch mit der Funkeinheit 20 als dritter Einheit 4 eine Parent-Child-Verbindung 13 eingehen kann.

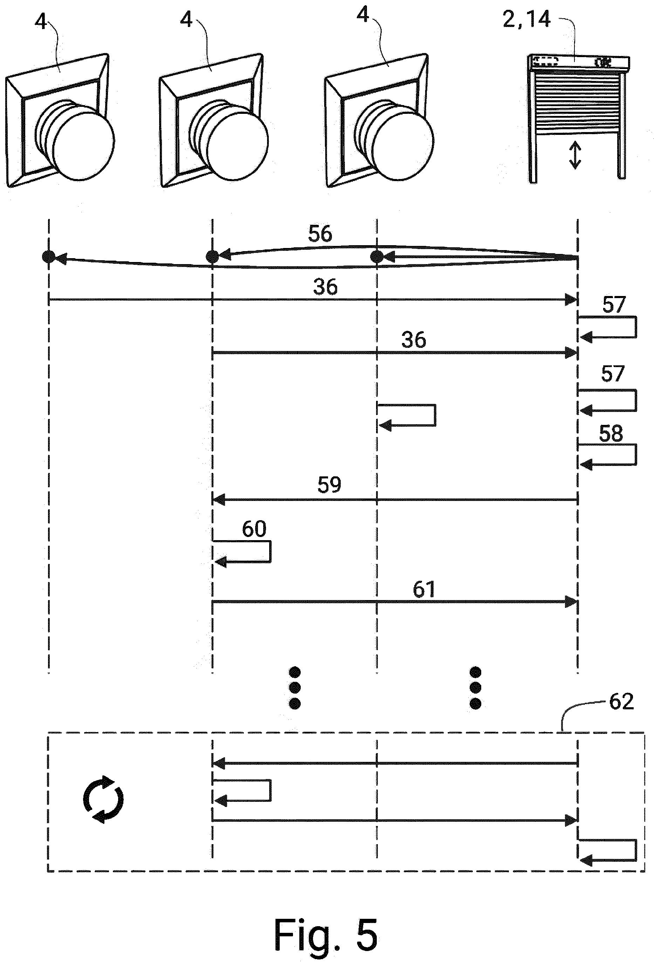

Weiter ist hier und vorzugsweise vorgesehen, dass das Aufwecksignal 22 in der Heimautomatisierungsanordnung 1 und/oder dem Heimautomatisierungsnetzwerk 5 ausschließlich in der Parent-Child-Kommunikation den Nachrichten 10 vorangestellt wird. Dies wird in Zusammenhang mit der Fig. 5 näher erläutert, anhand welcher beschrieben ist, wie eine Parent-Child-Verbindung 13 hergestellt werden kann.

Das Aufwecksignal 22 tritt im Heimautomatisierungsnetzwerk 5 und/oder der Heimautomatisierungsanordnung 1 hier und vorzugsweise also nur in Parent-Child-Verbindungen 13 auf. Alternativ kann es auch in einer direkten Kommunikation zwischen der zweiten Einheit 3 und der ersten Einheit 2 auftreten. Es kann dabei für mehrere verschiedene Parent-Child-Verbindungen 13 des Heimautomatisierungsnetzwerks 5 und/oder der Heimautomatisierungsanordnung 1 gleich ausgebildet sein, ist vorzugsweise aber für die einzelnen Parent-Child-Verbindungen 13 spezifisch ausgebildet. Es unterscheidet sich dann von dem Aufwecksignal 22 anderer Parent-Child-Verbindungen 13 der Heimautomatisierungsanordnung 1 und/oder des Heimautomatisierungsnetzwerks 5. Vorzugsweise ist die Länge des Aufwecksignals 22 in verschiedenen Parent-Child-Verbindungen 13 des Heimautomatisierungsnetzwerks 5 und/oder der Heimautomatisierungsanordnung 1 unterschiedlich lang und/oder gleich lang.

Hier und vorzugsweise gehört die dritte Einheit 4 dem Heimautomatisierungsnetzwerk 5 an und/oder ist mit einer Einheit des Heimautomatisierungsnetzwerks 5 gepairt, wie dies bei der Funkeinheit 20 in der Fig. 1 der Fall ist. Es kann aber auch vorgesehen sein, dass die dritte Einheit 4 dem Heimautomatisierungsnetzwerk 5 nicht angehört und/oder mit keiner Einheit des Heimautomatisierungsnetzwerks 5 gepairt ist. Dies trifft auf die zweite Rollladeneinheit 21 der Fig. 1 zu. Sie gehört zu einem anderen Heimautomatisierungsnetzwerk 5, hier dem eines separaten Gebäudes. Auch diese Einheit kann als Parent für das Aufwecken der ersten Einheit 2 und die Weiterleitung der Kommunikation zwischen der ersten Einheit 2 und der zweiten Einheit 3 dienen.

Weiter ist hier und vorzugsweise vorgesehen, dass die Kommunikation zwischen der zweiten Einheit 3 und dritten Einheit 4 zumindest abschnittsweise drahtlos ist und/oder die Kommunikation zwischen der ersten Einheit 2 und der dritten Einheit 4 zumindest abschnittsweise drahtlos ist und auf derselben Funkfrequenz erfolgt, wie die Kommunikation zwischen der zweiten Einheit 3 und der dritten Einheit 4. Im Ausführungsbeispiel und vorzugsweise erfolgt die drahtlose Kommunikation innerhalb der Heimautomatisierungsanordnung 1 und/oder dem Heimautomatisierungsnetzwerk 5 und insbesondere mit der dritten Einheit 4 auf derselben Funkfrequenz.

Das Heimautomatisierungsnetzwerk 5 zeichnet sich hier dadurch aus, dass die ihm angehörenden Einheiten einen Pairing-Prozess miteinander durchlaufen haben. In diesem werden sie einander zugeordnet. Dabei muss nicht jede Einheit mit jeder anderen Einheit gepairt sein, um dem Heimautomatisierungsnetzwerk 5 anzugehören, sondern es reicht aus, dass einzelne Einheiten miteinander gepairt sind und das Heimautomatisierungsnetzwerk 5 eine gemeinsame Menge an gepairten Einheiten aufweist. Während des Pairing-Prozesses können auch Schlüssel zur Signierung und/oder Verschlüsselung 35 zwischen den zu pairenden Einheiten für die zukünftige Kommunikation ausgetauscht werden. Diese sind vorzugsweise für die beiden zu pairenden Einheiten spezifisch. Zusätzlich oder alternativ kann für das Heimautomatisierungsnetzwerk 5 auch ein gemeinsamer Schlüssel vorgesehen sein und alle Einheiten, welche über diesen Schlüssel mit anderen Einheiten verbunden sind, gehören dem Heimautomatisierungsnetzwerk 5 an.

Nachfolgend wird das Aufwecken der ersten Einheit 2 anhand der Figuren 3 und 4 näher beschrieben.

Die Fig. 3 zeigt am Beispiel einer Rollladeneinheit 14 als erster Einheit 2 das vorschlagsgemäße Verfahren. Es wird zunächst ein Befehl an der zweiten Einheit 3 für die erste Einheit 2 ausgelöst. Hier gibt ein Benutzer 37 einen Befehl, beispielsweise zum Hoch- oder Herunterfahren des Rollladens 16 der Rollladeneinheit 14. Im Ausführungsbeispiel durch einen Tastendruck 38. Auf das Drücken der entsprechenden Taste 39 an der zweiten Einheit 3 generiert diese einen Befehl (Befehlsgenerierung 40) verschlüsselt diesen gegebenenfalls (Verschlüsselung 35) und sendet ihn als Inhalt einer Nachricht 28 mit derselben aus.

Die dritte Einheit 4 befindet sich mit der ersten Einheit 2 in einer Parent-Child-Verbindung 13. Sie empfängt direkt oder indirekt die Nachricht 10 der zweiten Einheit 3 an die erste Einheit 2. Dies löst in der dritten Einheit 4 eine Weiterleitungsroutine 41 aus. Daraufhin sendet sie das Aufwecksignal 22 aus und leitet die Nachricht 10 weiter. Hier stellt die dritte Einheit 4 das Aufwecksignal 22 als Präambel der weitergeleiteten Nachricht 10 voran.

Wie oben erläutert, prüft die erste Einheit 2 mehrstufig das Aufwecksignal 22, bevor sie in den Betriebsmodus 11 wechselt. Das Aufwecksignal 22 entspricht hier einer vordefinierten Signalfolge. Die mehrstufige Prüfung wird nachfolgend detailliert anhand der Fig. 4 erläutert.

Die erste Einheit 2 befindet sich beim Aussenden des Aufwecksignals 22 durch die dritte Einheit 4 im Energiesparmodus 12. In diesem prüft sie wiederkehrend, insbesondere zyklisch, in Lauschperioden 32, ob ein ankommendes drahtloses Signal eine vordefinierte Signalstärke überschreitet (Signalstärkenprüfung 42). Vorliegend wird ein RSSI-Wert (Received Signal Strength Indicator) geprüft. Hierbei handelt es sich um eine erste Stufe der Prüfung. Im Ausführungsbeispiel führt diese Prüfung der Transceiver 6 aus, wie in der Fig. 4 gezeigt. Wird die vordefinierte Signalstärke nicht überschritten, setzt die erste Einheit 2 das wiederkehrende, insbesondere zyklische, Prüfen im Energiesparmodus 12 fort, ob das ankommende drahtlose Signal eine vordefinierte Signalstärke überschreitet.

Überschreitet das ankommende drahtlose Signal eine vordefinierte Signalstärke, wechselt der Transceiver 6 hier und vorzugsweise in einen Empfangsmodus 43 und/oder startet einen Aufwecksignal-Timer 44. Dieser läuft hier im Transceiver 6.

Sofern das ankommende drahtlose Signal eine vordefinierte Signalstärke überschreitet, wie dies bspw. bei dem Aufwecksignal 22 der Fall ist, prüft die erste Einheit 2, hier und vorzugsweise für einen definierten Zeitraum, ob eine definierte Signalfolge gemäß dem Aufwecksignal 22 detektiert wird (Signalfolgenprüfung 45). Dies ist eine weitere Stufe der Prüfung. Im Ausführungsbeispiel führt auch diese Prüfung der Transceiver 6 aus.

Wird die definierte Signalfolge gemäß dem Aufwecksignal 22, insbesondere in einem definierten Zeitraum, nicht detektiert, setzt die erste Einheit 2, hier der Transceiver 6, das wiederkehrende, insbesondere zyklische, Prüfen, ob das ankommende drahtlose Signal eine vordefinierte Signalstärke überschreitet, in Lauschperioden 32 fort. Sofern die definierte Signalfolge gemäß dem Aufwecksignal 22 detektiert wird, startet der Transceiver 6 und/oder der Prozessor 7 einen Timer 46. Dieser läuft hier im Prozessor 7. Zusätzlich oder alternativ wird geprüft, ob ein Synchronisationsfeld 23, insbesondere innerhalb eines definierten Zeitraums, detektiert wird (Synchronisationsfeldprüfung 47). Dies ist eine weitere Stufe der Prüfung. Die Nachricht 10 wird empfangen (Nachrichtenempfang 48). Im Ausführungsbeispiel führt auch diese Prüfung der Transceiver 6 aus.

Sofern ein Synchronisationsfeld 23, insbesondere in dem definierten Zeitraum, detektiert wird, wechselt die erste Einheit 2 hier in den Betriebsmodus 11, um eine Nachricht 10 zu verarbeiten. Insbesondere kann vorgesehen sein, dass, sofern ein Synchronisationsfeld 23 detektiert wird, der Transceiver 6 und/oder der Prozessor 7 prüft, ob eine Nachricht 10 empfangen wurde, und/oder, dass der Transceiver 6 und/oder Prozessor 7 die erste Einheit 2 in den Betriebsmodus 11 versetzt, um die Nachricht 10 zu verarbeiten. Hier und vorzugsweise meldet der Transceiver 6 dem Prozessor 7, dass eine Nachricht 10 empfangen wurde (Nachrichtenmeldung 49). Der Prozessor 7 liest diese daraufhin im Transceiver 6 aus (Nachrichtenabruf 50). Danach kann der Prozessor 7 die Nachricht 10 verarbeiten und ggf. einen darin enthaltenen Befehl umsetzen, insbesondere eine Aktion ausführen 51. Sofern, insbesondere innerhalb des definierten Zeitraums, kein Synchronisationsfeld 23 und/oder keine Nachricht 10 empfangen wird, setzt die erste Einheit 2, insbesondere der Transceiver 6, das prüfen, ob das ankommende drahtlose Signal eine vordefinierte Signalstärke überschreitet in Lauschperioden 32 fort. Hierzu kann der Prozessor 7 einen entsprechenden Befehl an den Transceiver 6 senden.

Optional kann zusätzlich vor dem Wechsel in den Betriebsmodus 11 eine Prüfung der empfangenen Nachricht 10 vorgesehen sein, bevor in den Betriebsmodus 11 gewechselt wird. Hierbei kann es sich insbesondere um einen sogenannten CRC-Check handeln (cyclic redundancy check), also eine zyklische Redundanzprüfung. Auch diese Prüfung führt vorzugsweise der Transceiver 6 aus. Diese Prüfung ist im Ausführungsbeispiel der Fig. 4 nicht gezeigt.

Im Ausführungsbeispiel der Fig. 3 verarbeitet die erste Einheit 2 die empfangene Nachricht 10. Sie entschlüsselt den Inhalt der Nachricht 28 (Nachrichtenentschlüsselung 52). Sie generiert eine Empfangsbestätigung und verschlüsselt und signiert diese (Empfangsbestätigungsgenerierung 53 und Verschlüsselung 35).

Danach sendet sie diese als Nachricht 10 aus. Die dritte Einheit 4 empfängt sie. Dies löst eine Weiterleitungsroutine 41 aus. Daraufhin leitet die dritte Einheit 4 die Empfangsbestätigung als Nachricht 10 zur zweiten Einheit 3 weiter. Diese entschlüsselt diese (Nachrichtenentschlüsselung 52).

Hier ist der in der Nachricht 10 an die erste Einheit 2 enthaltene Befehl ein Befehl zum Runter- oder Herauffahren des Rollladens 16. Der Befehl ist also ein Befehl zum Ansteuern des Aktuators 8, hier des Antriebs des Rollladens 16. Es kann aber auch ein Befehl zum Auslösen und/oder Vorbereiten eines Updatevorgangs der ersten Einheit 2 und/oder ein Befehl zur Konfiguration der ersten Einheit 2 sein. Der Befehl wird dann von der ersten Einheit 2 ausgeführt. Hier wird der Rollladen 16 herauf- oder heruntergefahren. Nach dem Ausführen des Befehls wechselt die erste Einheit 2 von dem Betriebsmodus 11 wieder in den Energiesparmodus 12 (Wechsel in Energiesparmodus 54). Sie setzt das wiederkehrende, insbesondere zyklische, Prüfen, ob das ankommende drahtlose Signal eine vordefinierte Signalstärke überschreitet, in Lauschperioden 32 fort. Hierzu kann der Prozessor 7 einen entsprechenden Befehl zum Wechsel in den Energiesparmodus 55 nach dem Ablauf des Timers 46 und/oder dem Ausführen der Aktion an den Transceiver 6 geben.

Wie bereits zuvor beschrieben, sind die erste Einheit 2 und die dritte Einheit 4 dazu eingerichtet, miteinander eine Parent-Child-Verbindung 13 einzugehen. Durch das Eingehen der Parent-Child-Verbindung 13 wird eine Beziehung zwischen der ersten und der zweiten Einheit 3 hergestellt. Im Ausführungsbeispiel erfolgt hier der Versand von Nachrichten 10 von einer der zweiten Einheiten 3 immer über das Parent, hier die dritte Einheit 4, zu der ersten Einheit 2. Die dritte Einheit 4 ist hier dazu eingerichtet, dass wenn eine Parent-Child-Verbindung 13 zwischen der ersten Einheit 2 und der dritten Einheit 4 besteht und die dritte Einheit 4 eine Nachricht 10 direkt oder indirekt von der zweiten Einheit 3 für die erste Einheit 2 empfängt, das Aufwecksignal 22 für die erste Einheit 2 auszusenden.

Die Herstellung einer Parent-Child-Verbindung 13 soll nachfolgend anhand der Fig. 5 beschrieben werden. Ist die erste Einheit 2 noch keine Parent-Child-Verbindung 13 eingegangen, sendet sie eine Verbindungsanfrage 56 aus, in der sie umliegende Einheiten anfragt, ob diese ihr Parent werden können. Dies kann beispielsweise dann erfolgen, wenn die erste Einheit 2 mit Energie versorgt wird. Dies kann beispielsweise das Einsetzen einer Batterie sein.

Daraufhin prüfen die Verbindungsanfrage 56 empfangende Einheiten, ob sie als Parent für die erste Einheit 2 geeignet sind. Sofern dies der Fall ist, beantworten sie mit einer Antwortnachricht 36 die Verbindungsanfrage 56 der ersten Einheit 2. Vorzugsweise enthält die Antwortnachricht 36 eine die Verbindungsqualität beschreibende Angabe. Hier ist es die Signalstärke, mit der die Verbindungsanfrage 56 von der antwortenden Einheit empfangen wurde. Die erste Einheit 2 wertet die Verbindungsqualität zu den Einheiten aus, deren Antwortnachricht 36 sie empfangen hat (Verbindungsqualitätsauswertung 57). Hierzu nutzt sie die Angabe der Verbindungsqualität der Antwortnachrichten 36 und/oder führt hierzu eine eigene Messung durch. Dies kann beispielsweise die Messung der Signalstärke (RSSI) der empfangenen Antwortnachrichten 36 sein.

Die erste Einheit 2 wählt, vorzugsweise in Abhängigkeit von der Verbindungsqualität, eine der antwortenden Einheiten als Parent aus und stellt die Parent-Child-Verbindung 13 her (Bewertung und Auswahl des Parents 58). Vorzugsweise sendet die erste Einheit 2 dazu eine Nachricht 10 an die als Parent ausgewählte Einheit. Diese Nachricht 10 kann Informationen darüber enthalten, wie regelmäßig sich die erste Einheit 2 bei seinem Parent meldet und/oder wie groß der zeitliche Abstand zweier Lauschperioden 32 ist (Registriernachricht 59). Die dritte Einheit 4 prüft das Hinzufügen der ersten Einheit 2 als Child (Child-Registrier-Prüfung 60) und bestätigt dies der ersten Einheit 2. Hierauf erfolgt eine Bestätigung der ersten Einheit 2, hier des Childs mittels einer Nachricht 10 (Bestätigungsnachricht 61).

Nach der Herstellung der Parent-Child-Verbindung 13 meldet sich die erste Einheit 2 als Child, insbesondere regelmäßig, bei der dritten Einheit 4 als seinem Parent. Dies dient der Verbindungsprüfung 62. Das Parent antwortet und übermittelt das Ergebnis einer Messung für die Verbindungsqualität an das Child. Das Child prüft selbst auch die Verbindungsqualität. Danach entscheidet es, insbesondere in Abhängigkeit von der Verbindungsqualität, ob die Parent-Child-Verbindung 13 bestehen bleibt, oder, ob es sich einen neuen Parent sucht. Im letzteren Fall sendet die erste Einheit 2 erneut eine Verbindungsanfrage 56 aus.

Schließlich sei noch darauf hingewiesen, dass die erste Einheit 2, die zweite Einheit 3 und/oder die dritte Einheit 4 nicht wie im Ausführungsbeispiel ausgebildet sein müssen. Beispielsweise kann alternativ die erste Einheit 2 auch einen Aktuator 8 für eine andere Aufgabe aufweisen. Beispielsweise kann sie als Gurtwickler für einen Rollladen oder als Markiseneinheit ausgebildet sein, welche einen Aktuator 8 zum Einfahren und Ausfahren einer Markise aufweist. Zusätzlich oder alternativ kann eine als Sensoreinheit 15 ausgebildete erste Einheit 2 einen Sonnensensor und/oder einen Windsensor und/oder einen Bewegungssensor und/oder einen Beschleunigungssensor und/oder einen Rauchwarnsensor aufweisen. Natürlich kann die erste Einheit 2 sowohl einen Aktuator 8 als auch einen Sensor 9 oder mehrere Sensoren 9 aufweisen.

Hier weist die erste Einheit 2 die erste Einheit 2 zur Energieversorgung einen Energiespeicher 63, insbesondere eine wiederaufladbare Batterie auf. Zusätzlich oder alternativ kann sie auch ein Solarmodul zur Energieversorgung aufweisen. Bei einer solchen Ausgestaltung ist die energiesparende Ausgestaltung des Verfahrens, der Heimautomatisierungsanordnung 1 wie auch insbesondere der ersten Einheit 2 von besonderer Bedeutung.

Auch die zweite Einheit 3 und/oder die dritte Einheit 4 kann anders ausgebildet sein als im Ausführungsbeispiel beschrieben. Vorzugsweise wird die dritte Einheit 4 über ein Stromnetz mit Energie versorgt, während die zweite Einheit 3 ebenfalls über das Stromnetz oder einen Energiespeicher 63 mit Energie versorgt wird.

### Bezugszeichenliste

- 1: Heimautomatisierungsanordnung
- 2: erste Einheit
- 3: zweite Einheit
- 4: dritte Einheit
- 5: Heimautomatisierungsnetzwerk
- 6: Transceiver
- 7: Prozessor
- 8: Aktuator
- 9: Sensor
- 10: Nachricht
- 11: Betriebsmodus
- 12: Energiesparmodus
- 13: Parent-Child-Verbindung
- 14: Rollladeneinheit
- 15: Sensoreinheit
- 16: Rollladens
- 17: Rohrmotor
- 18: Schalter
- 19: Funk-Fernbedienung
- 20: Funkeinheit
- 21: zweite Rollladeneinheit
- 22: Aufwecksignal
- 23: Synchronisationsfeld
- 24: Empfängerkennung
- 25: Absenderkennung
- 26: Nachrichtenzähler
- 27: Time-to-Live-Zähler
- 28: Inhalt der Nachricht
- 29: Signatur
- 30: Prüffeld
- 31: Netzwerk
- 32: Lauschperiode
- 33: Pause
- 34: Mesh-Netzwerks
- 35: Verschlüsselung
- 36: Antwortnachricht
- 37: Benutzer
- 38: Tastendruck
- 39: Taste
- 40: Befehlsgenerierung
- 41: Weiterleitungsroutine
- 42: Signalstärkenprüfung
- 43: Empfangsmodus
- 44: Aufwecksignal-Timer
- 45: Signalfolgenprüfung
- 46: Timer
- 47: Synchronisationsfeldprüfung
- 48: Nachrichtenempfang
- 49: Nachrichtenmeldung
- 50: Nachrichtenabruf
- 51: Aktion ausführen
- 52: Nachrichtenentschlüsselung
- 53: Empfangsbestätigungsgenerierung
- 54: Wechsel in Energiesparmodus
- 55: Befehl zum Wechsel in den Energiesparmodus
- 56: Verbindungsanfrage
- 57: Verbindungsqualitätsauswertung
- 58: Bewertung und Auswahl des Parents
- 59: Registriernachricht
- 60: Child-Registrier-Prüfung
- 61: Bestätigungsnachricht
- 62: Verbindungsprüfung
- 63: Energiespeicher

## Patentansprüche

1. Verfahren zum Betreiben einer Heimautomatisierungsanordnung (1), wobei die Heimautomatisierungsanordnung (1) eine erste Einheit (2) und eine zweite Einheit (3) aufweist, wobei die erste und die zweite Einheit (3) miteinander gepairt sind und/oder demselben Heimautomatisierungsnetzwerk (5) angehören, wobei die erste Einheit (2) einen Betriebsmodus (11) und einen Energiesparmodus (12) aufweist, in welchem die erste Einheit (2) weniger Energie verbraucht als im Betriebsmodus (11),
**dadurch gekennzeichnet,**
**dass** eine dritte Einheit (4) vorgesehen ist, dass die erste Einheit (2) und die dritte Einheit (4) eine Parent-Child-Verbindung (13) eingegangen sind und die dritte Einheit (4) auf das direkte oder indirekt Empfangen einer Nachricht (10) von der zweiten Einheit (3) für die erste Einheit (2) die erste Einheit (2) mit einem Aufwecksignal (22) aufweckt.

2. Verfahren nach Anspruch 1, **dadurch gekennzeichnet, dass** die dritte Einheit (4) das Aufwecksignal (22) für die erste Einheit (2) generiert und die Nachricht (10) zu der ersten Einheit (2) weiterleitet, vorzugsweise, dass die dritte Einheit (4) das Aufwecksignal (22) als Präambel der weitergeleiteten Nachricht (10) voranstellt und/oder die Präambel der weiterzuleitenden Nachricht (10) verlängert.

3. Verfahren nach Anspruch 1 oder 2, **dadurch gekennzeichnet, dass** die erste Einheit (2) das Aufwecksignal (22) mehrstufig prüft, bevor sie in den Betriebsmodus (11) wechselt.

4. Verfahren nach einem der vorhergehenden Ansprüche, **dadurch gekennzeichnet, dass** der Energiesparmodus (12) der ersten Einheit (2) Lauschperioden (32) aufweist, in denen die erste Einheit (2) prüft, ob sie das Aufwecksignal (22) empfängt, vorzugsweise, dass das Aufwecksignal (22) länger ist, als die Pause (33) zwischen zwei Lauschperioden (32).

5. Verfahren nach einem der vorhergehenden Ansprüche, **dadurch gekennzeichnet, dass** in der Heimautomatisierungsanordnung (1) zwischen einzelnen Einheiten ein als Mesh-Netzwerk (34), insbesondere flooding-mesh-Netzwerk, ausgebildetes Netzwerk (31) besteht und dass die erste Einheit (2) über die dritte Einheit (4) in das Netzwerk (31) integriert wird, vorzugsweise aber nicht an der Weiterverteilung der Nachrichten (10) des Mesh-Netzwerks (34) teilnimmt.

6. Verfahren nach einem der vorhergehenden Ansprüche, **dadurch gekennzeichnet, dass** eine Einheit der Heimautomatisierungsanordnung (1), insbesondere die zweite Einheit (3) und/oder die dritte Einheit (4), nicht an sie gerichtete Nachrichten (10) einer anderen Einheit erneut sendet, sofern sie keine Bestätigung des Erhalts der Nachricht (10) der anderen Einheit innerhalb einer Repeating-Zeit erhält.

7. Verfahren nach einem der vorhergehenden Ansprüche, **dadurch gekennzeichnet, dass** das Aufwecksignal (22) kürzer ist, als ein Resend-Timeout der zweiten Einheit und/oder des Netzwerks (31), insbesondere des Mesh-Netzwerks (34).

8. Verfahren nach einem der vorhergehenden Ansprüche, **dadurch gekennzeichnet, dass** der Inhalt der Nachricht (28) von der zweiten Einheit (3) für die erste Einheit (2) verschlüsselt ist, vorzugsweise Ende-zu-Ende-verschlüsselt ist, weiter vorzugsweise, dass die dritte Einheit (4) den Inhalt der Nachricht (28) nicht auslesen kann.

9. Verfahren nach einem der vorhergehenden Ansprüche, **dadurch gekennzeichnet, dass** die Parent-Child-Verbindung (13), insbesondere zyklisch, geprüft wird und bei Unterschreiten einer vorbestimmten Verbindungsqualität eine neue Parent-Child-Verbindung (13) aufgebaut wird.

10. Verfahren nach einem der vorhergehenden Ansprüche, **dadurch gekennzeichnet, dass** das Aufwecksignal (22) in der Heimautomatisierungsanordnung (1) und/oder dem Heimautomatisierungsnetzwerk (5) ausschließlich in der Parent-Child-Kommunikation den Nachrichten (10) vorangestellt wird.

11. Verfahren nach einem der vorhergehenden Ansprüche, **dadurch gekennzeichnet, dass** die dritte Einheit (4) dem Heimautomatisierungsnetzwerk (5) nicht angehört und/oder mit keiner Einheit des Heimautomatisierungsnetzwerks (5) gepairt ist.

12. Verfahren nach einem der vorhergehenden Ansprüche, **dadurch gekennzeichnet, dass** die Kommunikation zwischen der zweiten Einheit (3) und dritten Einheit (4) zumindest abschnittsweise drahtlos ist und/oder die Kommunikation zwischen der ersten Einheit (2) und der dritten Einheit (4) zumindest abschnittsweise drahtlos ist, vorzugsweise, dass die Kommunikation zwischen der ersten Einheit (2) und der dritten Einheit (4) auf derselben Funkfrequenz erfolgt, wie die Kommunikation zwischen der zweiten Einheit (3) und der dritten Einheit (4), weiter vorzugsweise, dass die drahtlose Kommunikation innerhalb der Heimautomatisierungsanordnung (1) und insbesondere mit der dritten Einheit (4) auf derselben Funkfrequenz erfolgt.

13. Verfahren nach einem der vorhergehenden Ansprüche, **dadurch gekennzeichnet, dass** die erste Einheit (2) zur Energieversorgung einen Energiespeicher (63), insbesondere eine wiederaufladbare Batterie, und/oder ein Solarmodul aufweist und von dem Energiespeicher (63) und/oder dem Solarmodul mit Energie versorgt wird.

14. Heimautomatisierungsanordnung mit einer ersten Einheit (2) und einer zweiten Einheit (3), wobei die erste Einheit (2) und die zweite Einheit (3) miteinander gepairt sind und/oder demselben Heimautomatisierungsnetzwerk (5) angehören, wobei die erste Einheit (2) einen Betriebsmodus (11) und einen Energiesparmodus (12) aufweist, in welchem die erste Einheit (2) weniger Energie verbraucht als im Betriebsmodus (11),
wobei die erste Einheit (2) aus dem Energiesparmodus (12) durch ein Aufwecksignal (22) in den Betriebsmodus (11) überführbar ist,
**dadurch gekennzeichnet,**
**dass** eine dritte Einheit (4) vorgesehen ist und die erste Einheit (2) und die dritte Einheit (4) dazu eingerichtet sind, miteinander eine Parent-Child-Verbindung (13) einzugehen,
**dass** die dritte Einheit (4) dazu eingerichtet ist, dass wenn eine Parent-Child-Verbindung (13) zwischen der ersten Einheit (2) und der dritten Einheit (4) besteht und die dritte Einheit (4) eine Nachricht (10) direkt oder indirekt von der zweiten Einheit (3) für die erste Einheit (2) empfängt, ein Aufwecksignal (22) für die erste Einheit (2) auszusenden.

15. Heimautomatisierungsanordnung nach Anspruch 14, **dadurch gekennzeichnet, dass** die erste Einheit (2) als Rohrmotor (17) und/oder Gurtwickler ausgebildet ist und einen Aktuator (8) zum Herauffahren und zum Herunterfahren eines Rollladens (16) und/oder zum Einfahren und Ausfahren einer Markise aufweist, und/oder dass die erste Einheit (2) als Sensoreinheit (15) ausgebildet ist und einen Sonnensensor und/oder einen Windsensor und/oder einen Bewegungssensor und/oder einen Beschleunigungssensor und/oder Rauchwarnmelder aufweist.
